Europäisches Patentamt

European Patent Office

Office européen des brevets

(19)

(11) Numéro de publication : **0 145 086**
**B1**

(12) # FASCICULE DE BREVET EUROPÉEN

(45) Date de publication du fascicule du brevet :
**09.11.88**

(51) Int. Cl.⁴ : **A 01 C   1/06**

(21) Numéro de dépôt : **84201769.1**

(22) Date de dépôt : **30.11.84**

(54) Semences enrobées et procédé pour leur obtention.

(30) Priorité : **12.12.83 FR 8319983**

(43) Date de publication de la demande :
**19.06.85 Bulletin 85/25**

(45) Mention de la délivrance du brevet :
**09.11.88 Bulletin 88/45**

(84) Etats contractants désignés :
**AT BE CH DE FR GB IT LI NL SE**

(56) Documents cités :
**FR-A- 1 395 106**
**US-A- 3 113 399**
**US-A- 3 803 761**
**US-A- 3 852 913**

(73) Titulaire : **SOLVAY & Cie (Société Anonyme)**
**Rue du Prince Albert, 33**
**B-1050 Bruxelles (BE)**

(72) Inventeur : **Gago, Ignace**
**Chaussée de Nivelles 53**
**B-1420 Braine-l'Alleud (BE)**
Inventeur : **Detroz, René**
**Chaussée de Louvain 534**
**B-1328 Ohain (BE)**

Jouve, 18, rue St-Denis, 75001 Paris, France

EP 0 145 086 B1

**0 145 086**

### Description

La présente invention concerne des semences enrobées et un procédé pour l'obtention de semences enrobées.

L'enrobage des semences est une pratique devenue courante. Il vise notamment à améliorer les caractéristiques de germination, à fournir divers additifs susceptibles d'intervenir à un moment quelconque de l'établissement et de la croissance des plantes, à protéger les semences ou encore à donner à la semence une forme ou une dimension qui conviennent pour le semis automatique. On a ainsi proposé d'enrober des semences au moyen de matières nutritives, de charges, de fongicides, d'herbicides, d'insecticides, etc.

Les procédés connus d'enrobage présentent cependant de nombreux inconvénients.

Ainsi on a déjà proposé (brevet US 3 803 761) des semences enrobées par un polymère tel que de la cire, des esters ou éthers de cellulose, des polymères éthyléniques, des polyesters, des polyamides ; de tels polymères formant un film perméable à l'eau et à l'oxygène. Le film ainsi déposé sous forme d'un latex aqueux nécessite un séchage par de l'air chaud.

Il est fréquent que l'enrobant n'adhère pas convenablement à la semence de sorte qu'il ne résiste pas aux diverses manutentions auxquelles sont soumises les semences. Ce phénomène est particulièrement sensible pour les semences à prise d'eau rapide. En effet, au cours de l'enrobage, on observe fréquemment un gonflement important de certaines semences dû à l'absorption d'eau. Après séchage, la semence se contracte pour reprendre sa dimension initiale tandis que l'enrobant ne se contracte en général pas dans les mêmes proportions ; de ce fait il n'adhère plus convenablement à la semence et il se fragilise, se délite ou se désagrège.

Certains enrobants par contre sont tellement durs et résistants qu'ils ne se dissolvent ni ne se désagrègent facilement sous l'action de l'humidité et de l'eau une fois la semence mise en place, ce qui est également néfaste.

Au cours de l'enrobage, on a recours à de petites quantités d'eau comme décrit notamment dans le brevet US 3 113 399 notamment pour humecter les semences avant l'enrobage proprement dit, pour solubiliser ou disperser au moins l'un des agents constitutifs de l'enrobage ou encore pour solubiliser ou disperser les agents collants utilisés pour assurer l'adhérence des autres agents constitutifs de l'enrobage. La présence d'eau présente des inconvénients qui sont particulièrement importants lorsque les semences sont mal protégées et absorbent rapidement l'eau. En effet, certaines semences peuvent absorber de l'eau au cours de l'enrobage ce qui peut conduire à une initiation prématurée de la germination de sorte que les semences ne peuvent plus être stockées. Par ailleurs, il n'est souvent pas possible de sécher correctement la semence sous la couche d'enrobant ce qui entraîne des risques de dégradation au cours du stockage. Ces effets sont particulièrement sensibles lorsque les semences mises en œuvre sont des semences de légumineuses, de maïs et de crucifères.

De plus, certains agents constitutifs de l'enrobant, qui dans l'ensemble présentent des propriétés intéressantes, peuvent avoir des effets secondaires de phytotoxicité pour certaines semences.

Enfin, dans certains cas, il est malaisé d'enrober les semences de manière uniforme car leurs surfaces sont peu régulières et ne permettent pas un accrochage uniforme des enrobants. Les agents collants qu'on utilise habituellement pour faire adhérer les autres agents constitutifs de l'enrobage à la semence ne permettent pas de pallier simultanément tous ces inconvénients.

La présente invention vise à procurer des semences enrobées ainsi qu'un procédé pour leur obtention qui ne présentent pas les inconvénients respectifs des semences et des procédés connus.

Dans les semences enrobées selon l'invention, l'enrobant est très résistant notamment à la fragilisation et au délitage à sec et il adhère bien aux semences de sorte que la tenue des semences enrobées au stockage est excellente. L'enrobant se délite, se désagrège ou se dissout sous l'action de l'humidité ou de l'eau lorsque les semences sont mises en place dans leur milieu de culture. En outre, il n'exerce pas d'effet phytotoxique et il permet d'éviter une germination prématurée des semences.

Les semences enrobées selon l'invention présentent un taux de germination excellent. Lorsque l'enrobant contient des additifs actifs, ceux-ci sont libérés lentement ce qui permet de maintenir leur activité pendant une période assez longue. En outre, l'invention procure des semences pouvant contenir des produits phytosanitaires ce qui permet d'éviter de procéder, au moment du semis, à des manipulations de produits qui, souvent, présentent une certaine toxicité pour les utilisateurs.

Le procédé selon l'invention présente l'avantage de ne pas nécessiter l'emploi d'eau au cours de l'enrobage des semences et ainsi d'éviter tous les inconvénients liés à son utilisation.

La présente invention concerne à cet effet des semences enrobées par un enrobant selon lequel l'enrobant contient un polyester dont la température de fusion ne dépasse pas 80 °C. En général, les polyesters sont choisis parmi ceux dont la température de fusion est inférieure à 60 °C.

Divers types de polyesters conviennent. Les polyesters peuvent être des homopolymères ou des copolymères. En général, les polyesters sont choisis parmi les homo- et co-polymères de lactones telles que la ε-caprolactone et de la δ-valérolactone. Le plus souvent ils sont choisis parmi les homo- et co-polymères de la ε-caprolactone.

Les copolymères de lactones peuvent contenir divers types d'unités comonomériques. En général, il

2

0 145 086

s'agit de copolymères d'une lactone avec un oxyde d'oléfine tel que l'oxyde d'éthylène ou l'oxyde de propylène, avec un lactame tel que le caprolactame, avec une autre lactone, ou encore avec un mélange d'un glycol tel que l'éthylène glycol et d'un diacide carboxylique de préférence acyclique tel que l'acide adipique. Les copolymères de lactones peuvent contenir des quantités variables d'unités monomériques dérivées de la lactone. En général, ils contiennent au moins 10 % et le plus souvent au moins 20 % de leur poids d'unités monomériques dérivées de la lactone. Cette proportion ne dépasse le plus souvent pas 95 % et de préférence pas 90 % du poids du polymère.

Les polyesters du type homopolymères conviennent bien. Parmi ceux-ci, les homopolymères de lactones conviennent particulièrement bien. Les homopolymères de ε-caprolactone ont donné d'excellents résultats.

Les polyesters selon l'invention peuvent avoir des masses molaires moyennes variables. En général leur masse molaire moyenne est d'au moins 300 et le plus souvent d'au moins 500. En général leur masse molaire moyenne ne dépasse pas 60 000 et le plus souvent pas 50 000. D'excellents résultats ont été obtenus avec des polyesters de masse molaire moyenne d'environ 800 à environ 10 000.

L'enrobant peut également contenir des additifs divers. Il peut ainsi contenir des charges de type organique ou minéral. On peut également y incorporer des mélanges de charges. Les charges sont des poudres fines ayant en général une granulométrie telle qu'elles passent au travers d'un tamis de 170 et de préférence de 325 mesh (U.S. Standard). Comme charges de type organique on utilise en général des produits naturels à base de cellulose tels que la poudre dérivée du bois ou la farine de tourbe. Comme charges de type inorganique ou minéral on utilise des produits à base de silice, de silicates, de carbonates, de sels de calcium. On utilise en général des charges choisies parmi la silice broyée ou précipitée, le sable broyé, la bentonite, le talc, le kaolin, les terres à diatomées, les terres à foulon, la vermiculite, l'argile, le calcaire, la craie, le carbonate de calcium, l'oxyde de calcium, l'hydroxyde de calcium, le plâtre et leurs mélanges. En général, on utilise des charges non phytotoxiques.

L'enrobant peut également contenir un ou plusieurs autres additifs tels que des produits phytosanitaires, plus particulièrement des insecticides, nématicides, fongicides, désinfectants, répulsifs, herbicides et régulateurs de croissance, des agents permettant de préserver les semences contre les effets nocifs des herbicides sélectifs tels que le charbon actif, des agents nutritifs (engrais), des agents susceptibles d'améliorer la germination et la qualité des produits, des bactéries susceptibles d'influencer favorablement la germination, l'établissement ou la croissance des plantes, etc.

De bons résultats sont obtenus lorsque l'enrobant contient des produits phytosanitaires et plus particulièrement des fongicides. Des exemples de fongicides adéquats sont donnés dans la Liste des Produits Phytopharmaceutiques publiée par le Ministère de l'Agriculture, Service de la Protection des Végétaux, Bruxelles, 1968 et 1981 et dans l'Index Phytosanitaire publié par l'ACTA, Paris, 1981, pages 195 à 268. L'acétate de méthoxyéthylmercure, le bénomyl, le captane, l'oxyquinoléate de cuivre, le thirame, le thiabendazole, l'éthyrimol, le manèbe et le captafol conviennent bien. De bons résultats ont été obtenus avec le bénomyl, le captane et l'acétate de méthoxyéthylmercure.

De bons résultats sont obtenus lorsque l'enrobant contient des bactéries susceptibles d'influencer favorablement la germination, l'établissement ou la croissance des plantes telles que le Rhizobium.

La dose totale d'enrobant peut varier dans de très larges limites selon le type de semences, leurs formes et leurs dimensions. La dose totale d'enrobant est en général d'au moins 0,0001 fois le poids des semences. Le plus souvent, cette dose ne dépasse pas 100 fois le poids des semences sans que cette limite ne soit critique. Lorsqu'il n'est pas nécessaire de donner aux semences enrobées une forme ou des dimensions prédéterminées, la dose d'enrobant est le plus souvent d'au moins 0,01 et de préférence d'au moins 0,1 % du poids des semences et elle ne dépasse en général pas 200 % et de préférence pas 100 % de leur poids. Lorsqu'on désire donner aux semences une forme et des dimensions prédéterminées, la dose d'enrobant est en général d'au moins 0,5 et le plus souvent d'au moins 1 fois le poids des semences et elle ne dépasse en général pas 100 et le plus souvent 50 fois leur poids.

Les doses de polyesters dans l'enrobant selon l'invention peuvent être très variables. Elles peuvent être de 0,01 à 100 % du poids total de l'enrobant. En général la teneur en polyesters représente de 1 à 100 % du poids de l'enrobant si on en exclut les charges. L'enrobant peut être constitué essentiellement des polyesters selon l'invention. Dans ce cas l'enrobant contient en général de 80 à 100 % en poids de polyesters selon l'invention.

Lorsque l'enrobage doit conférer aux semences une forme ou une dimension prédéterminée, l'enrobant contient en général de 0,01 à 30 %, et le plus souvent de 0,1 à 20 % en poids de polyesters selon l'invention.

La teneur en charges peut varier dans de très larges limites. Elle est en général comprise entre 0 et 99 % du poids total de l'enrobant et de préférence entre 0,1 et 99 % du poids total de l'enrobant. Des teneurs comprises entre 1 et 98 % conviennent bien.

Les autres additifs peuvent être présents dans des proportions variables pouvant aller jusqu'à 95 % du poids de l'enrobant. La teneur en ces autres additifs est en général de 0,00001 à 95 % du poids de l'enrobant. En général la teneur en ces autres additifs représente de 0,1 à 95 %, et le plus souvent de 5 à 90 %, du poids de l'enrobant si on en exclut les charges.

Des enrobants particulièrement avantageux peuvent ainsi contenir de 80 à 100 % en poids de polyesters selon l'invention, et de 0 à 20 % d'additifs divers, l'enrobant étant présent en quantités de 0,01

3

à 100 % du poids des semences non enrobées.

D'autres enrobants également avantageux peuvent contenir de 0,1 à 70 % en poids de polyesters selon l'invention et de 30 à 99,9 % en poids d'additifs divers, l'enrobant étant présent en quantités de 0,01 à 200 % du poids des semences non enrobées.

D'autres enrobants particulièrement avantageux peuvent contenir de 0,1 à 25 % en poids de polyesters selon l'invention, de 30 à 99,8 % en poids de charges et de 0,1 à 69 % en poids d'autres additifs, l'enrobant étant présent en quantités de 0,5 à 100 fois le poids des semences non enrobées. Ces derniers conviennent lorsqu'on désire conférer aux semences une forme ou une dimension prédéterminée.

L'invention peut être appliquée à divers types de semences, telles que les semences de légumineuses, de graminées ou de dicotylédones. En général, on l'utilise pour les semences de légumineuses telles que les diverses sortes de pois, de haricots et de lentilles, la luzerne, le trèfle, la vesce, le soja, l'arachide, la féverole et le lupin, les semences de graminées telles que le ray-grass et les céréales (maïs, avoine, seigle, froment, millet, sorgo, orge, riz, etc.), les semences de dicotylédones telles que la chicorée, la laitue, le tabac, la tomate, la carotte, les choux et le colza et les semences de crucifères telles que le radis. On obtient de bons résultats avec des semences de légumineuses telles que les semences de pois et de soja et avec des semences de graminées telles que l'orge, l'avoine et l'escourgeon.

La présente invention concerne également un procédé pour l'enrobage des semences.

L'enrobage peut se faire selon diverses techniques. Le polyester peut être mis en œuvre tel quel à l'état liquide ou fondu ou sous forme de solution dans un solvant organique.

Une technique particulière consiste à appliquer sur les semences de polyester à l'état liquide ou fondu et, si nécessaire, à ajouter les charges ou les autres additifs. Quand on désire mettre en œuvre simultanément le polyester selon l'invention et des charges ou autres additifs, les deux opérations peuvent être faites simultanément ou successivement. En général, on applique sur les semences le polyester à l'état liquide ou fondu et ensuite on ajoute les charges ou les autres additifs. L'introduction de polyester à l'état liquide ou fondu peut se poursuivre pendant l'introduction des charges ou des autres additifs. On peut interrompre l'introduction des charges ou des autres additifs une ou plusieurs fois et procéder dans l'intervalle à une nouvelle application de polyesters à l'état liquide ou fondu et cela jusqu'à l'enrobage complet des semences.

Une autre technique consiste à mettre en œuvre le polyester sous la forme d'une solution dans un solvant organique. La suite des opérations est similaire à celles utilisées pour l'enrobage à l'intervention de polyesters à l'état liquide ou fondu.

Divers solvants organiques peuvent être utilisés à cette fin. Ils sont en général choisis parmi les solvants organiques comportant des groupes aromatiques ou les solvants organiques substitués par des halogènes tels que le chlore et le brome, des groupes nitro, des groupes carbonyles, des groupes carboxyles, des groupes esters et des groupes alkoxy. On peut également utiliser des mélanges de solvants. On peut ainsi utiliser des mélanges des solvants précités entre eux ou avec des alcools. Les solvants sont le plus souvent choisis parmi les composés organiques contenant de 1 à 12 atomes de carbone ; quand il s'agit de composés aromatiques leur nombre d'atomes de carbone est de 4 à 12. Les alcools contiennent en général de 1 à 8 atomes de carbone.

De bons résultats ont été obtenus avec des solvants halogénés ou plus particulièrement des solvants chlorés seuls ou en mélange avec des alcools.

Les meilleurs résultats ont été obtenus avec un chlorométhane tel que le chlorure de méthylène seul ou en mélange avec un alcool tel que le méthanol.

Les solutions de polyesters peuvent contenir des quantités variables de polyesters. En général, pour des raisons économiques, on utilise des solutions dont la concentration est égale à ou voisine de la saturation. De bons résultats sont obtenus avec des solutions contenant de 10 à 60 % de leurs poids de polyesters.

Les semences peuvent être traitées par le polyester selon le procédé de l'invention dans divers types d'appareils connus en eux-mêmes et convenant pour l'enrobage. Des granulateurs comme les tambours rotatifs, les soles tournantes, etc. peuvent ainsi être utilisés.

Le polyester, soit à l'état liquide ou fondu, soit sous forme de solution, peut être appliqué sur les semences selon diverses techniques connues par elles-mêmes. On peut ainsi l'épandre goutte à goutte sur les semences disposées dans un appareil à enrober tel qu'un granulateur ou on peut le disperser à l'aide d'un appareil du type pulvérisateur. Lorsque le polyester est normalement solide ou pâteux à la température ambiante et qu'on désire le mettre en œuvre à l'état fondu, le moyen utilisé pour l'épandre ou le disperser sera muni d'un dispositif de chauffage permettant d'amener le polyester à sa température de fusion ou à une température légèrement supérieure, le plus souvent à une température comprise entre la température de fusion et cette température plus 20 ºC. Dans ce cas, les semences sont maintenues à une température voisine de, ou légèrement supérieure à la température de fusion du polyester.

Lorsque le polyester est mis en œuvre à l'état fondu, les semences sont refroidies après l'enrobage dans l'appareil à enrober, de préférence sous agitation. Lorsque le polyester est mis en œuvre sous forme de solution, les semences sont séchées après enrobage. Le séchage peut se faire selon toute technique connue en elle-même telle que par passage d'un courant d'air forcé éventuellement chauffé sur les semences qui peuvent être disposées à cette fin dans des appareils tels que des tamis, ou encore par séchage par ventilation naturelle.

4

Afin d'illustrer l'invention sans pour autant en limiter la portée, on donne ci-après des exemples pratiques de réalisation.

## Exemples 1R à 4

Germination des semences de soja

Les semences de soja sont enrobées au moyen de polycaprolactone dans un appareil à enrober. Deux modes de mise œuvre du polyester ont été choisis : pulvérisation du polyester fondu à l'aide d'un pulvérisateur chauffé à 35 °C (exemple 2) ou 45 °C (exemple 4) sur les semences légèrement chauffées et pulvérisation d'une solution à 50 % de polycaprolactone dans du chlorure de méthylène (exemple 3).

Les semences enrobées sont mises à germer sur papier filtre humide. Les essais de germination ont été réalisés à 20-22 °C.

Deux qualités de polycaprolactones commercialisées par INTEROX ont été mises en œuvre : CAPA 520 (exemples 2 et 3) et CAPA 215 (exemple 4).

Un essai de germination de semences non enrobées a été réalisé à titre de comparaison (exemple 1R).

Les conditions opératoires et les résultats obtenus sont rassemblés au Tableau 1.

Tableau 1

| EXEMPLES | 1R | 2 | 3 | 4 |
|---|---|---|---|---|
| **Enrobant** | | | | |
| g/100 g semences | | | | |
| CAPA 520* | | 2 | 2 | |
| CAPA 215* | | | | 2 |
| **Germination** | | | | |
| taux de germination, % | | | | |
| après 1 jour | 0 | 3,3 | 6,6 | 3,3 |
| 2 jours | 3,3 | 86,3 | 100 | 93,3 |
| 3 jours | 23,3 | 100 | 100 | 100 |
| 7 jours | 96,6 | 100 | 100 | 100 |

\* polycaprolactone commercialisée par Interox.

## Exemples 5R et 6

Germination des semences de pois Oberon

Les semences de pois Oberon ont été enrobées dans un appareil à enrober par pulvérisation d'une solution à 33 % en poids de polycaprolactone CAPA 220 dans du chlorure de méthylène. Simultanément on a introduit dans l'appareil à enrober un fongicide (exemple 6).

Les semences enrobées sont mises à germer en boîte sur papier filtre humide. Les essais de germination ont été réalisés à 20-22 °C. La vigueur des plantules a été examinée après 7 jours.

Un essai de germination de semences non enrobées a été réalisé à titre de comparaison (exemple 5R).

Les conditions opératoires et les résultats obtenus sont rassemblés au Tableau 2.

(Voir Tableau 2 page 6)

Tableau 2

| EXEMPLES | 5R | 6 |
|---|---|---|
| Enrobant | | |
| g/100 g semences | | |
| CAPA 220* | − | 1 |
| Fongicide | − | 0,2 |
| Germination | | |
| taux de germination, % | | |
| après 4 jours | 52,4 | 81 |
| 7 jours | 100 | 100 |
| Vigueur des plantules | | |
| poids moyen, mg | | |
| après 7 jours | 460 | 680 |

* polycaprolactone commercialisée par Interox.


Exemples 7R, 8 et 9

Germination de semences d'escourgeon

Les semences d'escourgeon ont été enrobées, dans un appareil à enrober, par une solution à 50 % en poids de polycaprolactone, CAPA 220, dans du chlorure de méthylène. La solution a été introduite dans l'appareil à enrober par pulvérisation (exemple 8) ou goutte à goutte (exemple 9). Simultanément on a introduit dans l'appareil à enrober un fongicide.

Les semences enrobées sont mises à germer sur papier filtre humide. Les essais de germination ont été réalisés à 20-22 °C. Le taux de développement a été mesuré après 4 jours par comptage du nombre de tigelles apparues.

Un essai de germination des semences non enrobées a été réalisé à titre de comparaison (exemple 7R).

Les conditions opératoires et les résultats obtenus sont rassemblés au Tableau 3.


Tableau 3

| EXEMPLES | 7R | 8 | 9 |
|---|---|---|---|
| Enrobant | | | |
| g/100 g semences | | | |
| CAPA 220 | | 3 | 3 |
| Fongicide | | 1,8 | 1,8 |
| Germination | | | |
| taux de germination, % | | | |
| après 4 jours | 96,6 | 96,6 | 93,3 |
| Avancement | | | |
| taux de développement, % | 40 | 93,3 | 86,6 |

**0 145 086**

Exemples 10R et 11 Culture du soja

Les semences de soja ont été enrobées dans un appareil à enrober par pulvérisation d'une solution à 50 % en poids de polycaprolactone CAPA 220 dans du chlorure de méthylène (exemple 11).

Les semences enrobées sont mises en terre. La terre a été maintenue constamment humide. Après quatre mois, les plants ont été récoltés. Leur poids moyen, le poids moyen des gousses et le poids moyen des semences récoltées a été mesuré.

Un essai de comparaison a été réalisé avec des semences non enrobées (exemple 10R).

Les doses d'enrobant et les résultats obtenus sont rassemblés au Tableau 4. Dans chacun des exemples, les moyennes ont été faites sur quatre répétitions portant chacune sur 30 semences.

Tableau 4

| EXEMPLES | 10R | 11 |
|---|---|---|
| Enrobant | | |
| g/100 g semences | | |
| CAPA 220 | – | 1 |
| Développement des plants | | |
| g/plant | | |
| poids moyen de plants | 15,3 | 16,5 |
| poids moyen des gousses | 5,8 | 6,5 |
| poids moyen des semences | 1,23 | 1,41 |

**Revendications**

1. Semences enrobées par un enrobant caractérisées en ce que l'enrobant contient un polyester dont la température de fusion ne dépasse pas 80 °C.

2. Semences enrobées selon la revendication 1, caractérisées en ce que l'enrobant contient un polymère de la ε-caprolactone.

3. Semences enrobées selon les revendications 1 ou 2, caractérisées en ce qu'elles contiennent en outre des produits phytosanitaires.

4. Semences enrobées selon la revendication 3, caractérisées en ce qu'elles contiennent un fongicide.

5. Semences enrobées selon la revendication 1 ou 2, caractérisées en ce qu'elles contiennent en outre des bactéries susceptibles d'influencer favorablement la germination, l'établissement ou la croissance des plantes.

6. Semences enrobées selon l'une quelconque des revendications 1 à 5, caractérisées en ce qu'elles contiennent un enrobant à des doses de 0,01 à 100 % du poids des semences non enrobées, l'enrobant contenant de 80 à 100 % en poids de polyesters.

7. Semences enrobées selon l'une quelconque des revendications 1 à 5, caractérisées en ce qu'elles contiennent un enrobant à des doses de 0,5 à 100 fois le poids des semences enrobées, l'enrobant contenant de 0,1 à 25 % en poids de polyesters, de 30 à 99,8 % en poids de charges et de 0,1 à 69 % en poids d'autres additifs.

8. Semences enrobées selon l'une quelconque des revendications 1 à 5, caractérisées en ce qu'elles contiennent un enrobant à des doses de 0,01 à 200 % du poids des semences non enrobées, l'enrobant contenant de 0,1 à 70 % en poids de polyesters et de 30 à 99,9 % en poids d'additifs divers.

9. Procédé pour l'obtention de semences enrobées selon l'une quelconque des revendications 1 à 8, caractérisé en ce qu'on traite les semences au moyen d'une solution du polyester dans un solvant organique.

10. Procédé pour l'obtention de semences enrobées selon l'une quelconque des revendications 1 à 8, caractérisé en ce qu'on traite les semences au moyen du polyester à l'état liquide ou fondu.

7

**Claims**

1. Seeds coated with a coating, characterized in that the coating contains a polyester the melting temperature of which does not exceed 80 °C.

2. Coated seeds according to Claim 1, characterized in that the coating contains a polymer of ε-caprolactone.

3. Coated seeds according to Claims 1 or 2, characterized in that they additionally contain plant protection products.

4. Coated seeds according to Claim 3, characterized in that they contain a fungicide.

5. Coated seeds according to Claim 1 or 2, characterized in that they additionally contain bacteria capable of beneficially affecting the germination, formation or growth of the plants.

6. Coated seeds according to any one of Claims 1 to 5, characterized in that they contain a coating in doses of 0.01 to 100 % of the weight of the uncoated seeds, the coating containing from 80 to 100 % by weight of polyesters.

7. Coated seeds according to any one of Claims 1 to 5, characterized in that they contain a coating at doses of 0.5 to 100 times the weight of the coated seeds, the coating containing from 0.1 to 25 % by weight of polyesters, from 30 to 99.8 % by weight of fillers and from 0.1 to 69 % by weight of other additives.

8. Coated seeds according to any one of Claims 1 to 5, characterized in that they contain a coating at doses of 0.01 to 200 % by weight of the uncoated seeds, the coating containing from 0.1 to 70 % by weight of polyesters and from 30 to 99.9 % by weight of various additives.

9. Process for preparing coated seeds according to any one of Claims 1 to 8, characterized in that the seeds are treated by means of a solution of polyester in an organic solvent.

10. Process for preparing coated seeds according to any one of Claims 1 to 8, characterized in that the seeds are treated by means of the polyester in the liquid or molten state.


**Patentansprüche**

1. Mit einem Umhüllungsmittel umhüllte Samen, dadurch gekennzeichnet, daß das Umhüllungsmittel einen Polyester enthält, dessen Schmelztemperatur nicht oberhalb 80 °C liegt.

2. Umhüllte Samen gemäß Anspruch 1, dadurch gekennzeichnet, daß das Umhüllungsmittel ein Polymer von ε-caprolacton enthält.

3. Umhüllte Samen gemäß Ansprüchen 1 oder 2, dadurch gekennzeichnet, daß sie außerdem phytosanitäre Produkte enthalten.

4. Umhüllte Samen gemäß Anspruch 3, dadurch gekennzeichnet, daß sie ein Fungizid enthalten.

5. Umhüllte Samen gemäß Anspruch 1 oder 2, dadurch gekennzeichnet, daß sie außerdem Bakterien enthalten, die die Keimung, das Anwachsen oder das Wachstum der Pflanzen begünstigen.

6. Umhüllte Samen gemäß einem der Ansprüche 1 bis 5, dadurch gekennzeichnet, daß sie ein Umhüllungsmittel in Mengen von 0,01 bis 100 Gew.-% bezogen auf die nicht-umhüllten Samen enthalten, wobei das Umhüllungsmittel 80 bis 100 Gew.-% an Polyester enthält.

7. Umhüllte Samen gemäß einem der Ansprüche 1 bis 5, dadurch gekennzeichnet, daß sie ein Umhüllungsmittel in einer Menge von 0,5 bis zum 100-fachen des Gewichts der umhüllten Samen enthalten, wobei das Umhüllungsmittel 0,1 bis 25 Gew.-% Polyester, 30 bis 99,8 Gew.-% Füllmaterial und 0,1 bis 69 Gew.-% anderer Zusätze enthält.

8. Umhüllte Samen gemäß einem der Ansprüche 1 bis 5, dadurch gekennzeichnet, daß sie ein Umhüllungsmittel enthalten in einer Menge von 0,01 bis 200 Gew.-% bezogen auf die nicht-umhüllten Samen, wobei das Umhüllungsmittel 0,1 bis 70 Gew.-% an Polyester und 30 bis 99,9 Gew.-% verschiedenen Zusätzen enthält.

9. Verfahren zur Herstellung von umhüllten Samen gemäß einem der Ansprüche 1 bis 8, dadurch gekennzeichnet, daß man die Samen mittels einer Lösung des Polyesters in einem organischen Lösungsmittel behandelt.

10. Verfahren zur Herstellung von umhüllten Samen gemäß einem der Ansprüche 1-8, dadurch gekennzeichnet, daß man die Samen mit dem Polyester im flüßigen oder geschmolzenen Zustand behandelt.